# EUROPEAN PATENT APPLICATION

(11) **EP 2 148 283 A1**
(43) Date of publication of application: **27.01.2010**
(21) Application number: 09166203.1
(22) Date of filing: 23.07.2009
(51) Int. Cl.: G06F 17/30

(54) **Display control apparatus, display control method and program**

(30) Priority: 25.07.2008 JP 2008191836
(71) Applicant: Sony Corporation, Minato-ku Tokyo (JP)
(72) Inventor: Ito, Yumi, Tokyo (JP)
(74) Representative: Thévenet, Jean-Bruno

(57) **Abstract**

The present invention provides a display control apparatus (100) including a display control unit (158) that causes a display apparatus (200) to display thumbnails of a plurality of pieces of content by associating with a date/time display showing date/time information of a predetermined period for each piece of the date/time information of thumbnails of the plurality of pieces of content, and a selection unit (156) that selects one of thumbnails of the plurality of pieces of content displayed in the display apparatus (200) in accordance with a user operation, wherein the display control unit (158) causes the display apparatus (200) to display thumbnails of one piece or more than one pieces of content corresponding to date information of a thumbnail of one piece of content selected by the selection unit (156) by arranging thumbnails of the content clockwise in descending order of time.

## Description

### BACKGROUND OF THE INVENTION

### FIELD OF THE INVENTION

The present invention relates to a display control apparatus, a display control method, and a program, and in particular, relates to a display control apparatus that displays a thumbnail of content, a display control method, and a program.

### DESCRIPTION OF THE RELATED ART

In recent years, devices such as digital cameras and digital video cameras that pick up and record still images or dynamic images and devices such as video recorders that record video of TV broadcasting and the like in hard disk drives, DVDs and the like are generally widespread. Further, with large-capacity memory cards and hard disk drive devices coming into wide use, it has becomes possible for general users to hold a large amount of digital image content (hereinafter, referred to also as content).

On the other hand, it is difficult to find out digital image content desired by the user from a device holding a large amount of content. Similarly, it is difficult to find out user desired content from a device that is connected to a plurality of devices to reproduce digital image content held by such devices, though the device itself does not hold a large amount of content.

Thus, a technology to arrange and display content based on chronological information associated with the content is disclosed to enable a fast search of content desired by the user (for example, Patent Document 1 and Patent Document 2).

[Patent Document 1] Japanese Patent Application Laid-Open No. 2006-277184
[Patent Document 2] Japanese Patent Application Laid-Open No. 2006-285471

### SUMMARY OF THE INVENTION

However, there is an issue that it is difficult to intuitively find out desired content from displayed content even after the content being simply chronologically arranged and displayed as disclosed in Japanese Patent Application Laid-Open No. 2006-277184 or Japanese Patent Application Laid-Open No. 2006-285471.
The present invention has been made in view of the above issue and it is desirable to provide a novel and improved display control apparatus capable of intuitively finding out desired content from a large amount of content, a display control method, and a program.

According to an embodiment of the present invention, there is provided a display control apparatus, including: a display control unit that causes a display apparatus to display thumbnails of a plurality of pieces of content by associating with a date/time display showing date/time information of a predetermined period for each piece of the date/time information of thumbnails of the plurality of pieces of content; and a selection unit that selects one of thumbnails of the plurality of pieces of content displayed in the display apparatus in accordance with a user operation, wherein the display control unit causes the display apparatus to display thumbnails of one piece or more than one pieces of content corresponding to date information of a thumbnail of one piece of content selected by the selection unit by arranging thumbnails of the content clockwise in descending order of time.

According to the above configuration, a display apparatus is caused to display thumbnails of a plurality of pieces of content by associating with a date/time display showing date/time information of a predetermined period for each piece of date/time information of thumbnails of the plurality of pieces of content and if one of displayed thumbnails of the plurality of pieces of content is selected, thumbnails of one piece or more than one pieces of content corresponding to date information of a thumbnail of one selected piece of content are arranged as thumbnails of content clockwise in descending order of time and displayed in the display apparatus. Accordingly, thumbnails of content are displayed together with date/time information and therefore, the user can intuitively grasp the presence of content of about what time.

Further, the display control unit may cause the display apparatus to display thumbnails of the content by associating with a clock display in which one turn corresponds to 12 hours and arranging thumbnails of the content clockwise in descending order of time.

The display control unit may display thumbnails of the plurality of pieces of content corresponding to a date/time display showing date/time information of a period after a predetermined time passes or before the predetermined time passes from a period displayed in the display apparatus in accordance with a user operation.

Further, the display control unit may cause the display apparatus to display information about a length of each piece of content together with the display of thumbnails of each piece of content.

The display control apparatus may be connected to one or more than one other devices and may include an acquisition unit that acquires a contents list containing thumbnails and date/time information of content recorded in the other devices and a classification unit that classifies thumbnails of content based on the date/time information of a plurality of contents lists acquired by the acquisition unit.

According to the above configuration, if a plurality of external devices is connected to a display control apparatus, contents lists recorded in the plurality of external devices is acquired to classify acquired lists contents according to each piece of date/time information of thumbnails of content contained in the contents lists. Accordingly, all contents lists recorded in the plurality of external devices can be collected and classified according to date or date/time so that content can be transparently grasped without being aware of in which external device the content is recorded.

Further, the display control unit may cause a display indicating the other devices connected to the display control apparatus to be made together with thumbnails of the content.

Further, the display control unit may cause the display apparatus to display thumbnails of the plurality of pieces of content by associating with the date/time display in which date/time information of a predetermined period is made to be chronologically arranged and displayed.

Further, the display control unit may cause the display apparatus to make a display showing a number of pieces of content corresponding to the date/time display in which date/time information of the predetermined period is made to be chronologically arranged and displayed.

The display control unit may cause the display apparatus to display thumbnails of the plurality of pieces of content by associating with a date display in which date information of a predetermined period is caused to be arranged and displayed on a calendar.

According to another embodiment of the present invention, there is provided a display control method including the steps of: causing a display apparatus to display thumbnails of a plurality of pieces of content by associating with a date/time display showing date/time information of a predetermined period for each piece of the date/time information of thumbnails of the plurality of pieces of content; selecting one of thumbnails of the plurality of pieces of content displayed in the display apparatus in accordance with a user operation; and causing the display apparatus to display thumbnails of one piece or more than one pieces of content corresponding to date information of a thumbnail of the one selected piece of content by arranging thumbnails of the content clockwise in descending order of time.

According to another embodiment of the present invention, there is provided a program causing a computer to function as a display control apparatus, including: a display control unit that causes a display apparatus to display thumbnails of a plurality of pieces of content by associating with a date/time display showing date/time information of a predetermined period for each piece of the date/time information of thumbnails of the plurality of pieces of content; and a selection unit that selects one of thumbnails of the plurality of pieces of content displayed in the display apparatus in accordance with a user operation, wherein the display control unit causes the display apparatus to display thumbnails of one piece or more than one pieces of content corresponding to date information of a thumbnail of one piece of content selected by the selection unit by arranging thumbnails of the content clockwise in descending order of time.

According to the embodiments of the present invention described above, desired content can intuitively be found out from a large amount of content.

### BRIEF DESCRIPTION OF THE DRAWINGS

FIG. 1 is a block diagram showing a configuration example of a display control apparatus according to an embodiment of the present invention;
FIG. 2 is a block diagram showing the hardware configuration of the display control apparatus according to the embodiment;
FIG. 3 is a block diagram showing the function configuration of the display control apparatus according to the embodiment;
FIG. 4 is an explanatory view illustrating content of a contents list according to the embodiment;
FIG. 5 is an explanatory view illustrating a screen display example when thumbnails of content according to the embodiment are displayed in a display apparatus;
FIG. 6 is an explanatory view illustrating a screen display example when thumbnails of content according to the embodiment are displayed in a display apparatus;
FIG. 7 is an explanatory view illustrating a screen display example when thumbnails of content according to the embodiment are displayed in a display apparatus;
FIG. 8 is an explanatory view illustrating a screen display example when thumbnails of content according to the embodiment are displayed in a display apparatus;
FIG. 9 is an explanatory view illustrating a screen display example when thumbnails of content according to the embodiment are displayed in a display apparatus;
FIG. 10 is an explanatory view illustrating a screen display example when thumbnails of content according to the embodiment are displayed in a display apparatus;
FIG. 11 is an explanatory view illustrating a screen display example when thumbnails of content according to the embodiment are displayed in a display apparatus;
FIG. 12 is an explanatory view illustrating a screen display example when thumbnails of content according to the embodiment are displayed in a display apparatus;
FIG. 13 is an explanatory view illustrating a screen display example when thumbnails of content according to the embodiment are displayed in a display apparatus; and
FIG. 14 is a flow chart illustrating a display control method according to the embodiment.

### DETAILED DESCRIPTION OF THE PREFERRED EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

The "DETAILED DESCRIPTION OF THE PREFERRED EMBODIMENTS" will be described in the order shown below:
[1] Purpose of the present invention
[2] Hardware configuration of the display control apparatus
[3] Function configuration of the display control apparatus
[4] Operation of the display control apparatus

### [1] Purpose of the present invention

First, the purpose of an embodiment of the present invention will be described. In recent years, devices such as digital cameras and digital video cameras that pick up and record still images or dynamic images and devices such as video recorders that record video of TV broadcasting and the like in hard disk drives, DVDs and the like are generally widespread. Further, with large-capacity memory cards and hard disk drive devices coming into wide use, it has becomes possible for general users to hold a large amount of digital image content (hereinafter, referred to also as content).

On the other hand, it is difficult to find out digital image content desired by the user from a device holding a large amount of content. Similarly, it is difficult to find out user desired content from a device that is connected to a plurality of devices to reproduce digital image content held by such devices, though the device itself does not hold a large amount of content.

Thus, a technology to arrange and display content based on chronological information associated with the content is disclosed to enable a fast search of content desired by the user. However, there is an issue that it is difficult to intuitively find out desired content from displayed content even after the content being simply chronologically arranged and displayed. Thus, a display control apparatus 100 according to an embodiment of the present invention has been created using the above circumstances as one focus of attention. According to the display control apparatus 100 in the present embodiment, desired content can intuitively be found out from a large amount of content.

In the present embodiment, the display control apparatus 100 is configured as a separate apparatus from a display apparatus such as a display, but the present embodiment is not limited to such an example. For example, the display control apparatus may be combined with a display apparatus as a unit. The display control apparatus 100 may also be configured to have a recording medium to record content or connected to another device to acquire information about content held by the other device.

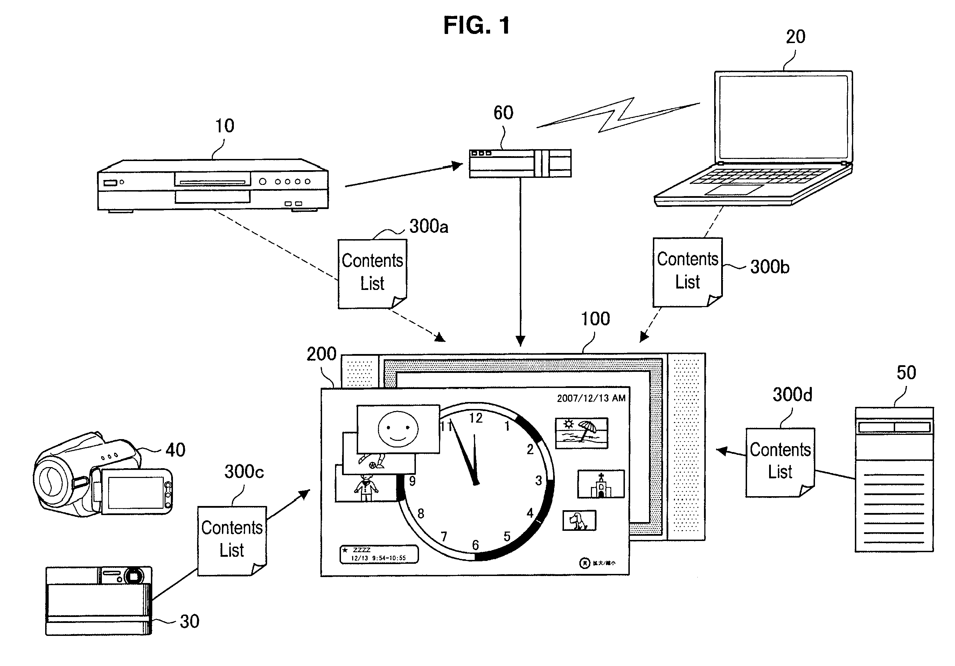

In FIG. 1, for example, a TV set 100 having a display screen is illustrated as an example of the display control apparatus 100. As shown in FIG. 1, a plurality of devices such a BD recorder 10, a PC 20, a digital camera 30, a camcorder 40, and an external HDD 50 is externally connected to the TV set 100. In this case, desired content can intuitively be found out from content contained in all devices by acquiring information about content held in each device.

Information about content is contained in Contents List described later. The display control apparatus 100 can acquire information about content by acquiring contents list from each connected device. The display control apparatus 100 acquires information about all content from each connected device and displays not only the date/time, but also a thumbnail and the like in the display control apparatus 100.

Accordingly, the user can transparently find out desired content from content recorded in the recording apparatus of each device without being aware of what content is held in which device. Since the user can do search work without being aware of connected devices, stress during search work can be reduced.

### [2] Hardware configuration of the display control apparatus

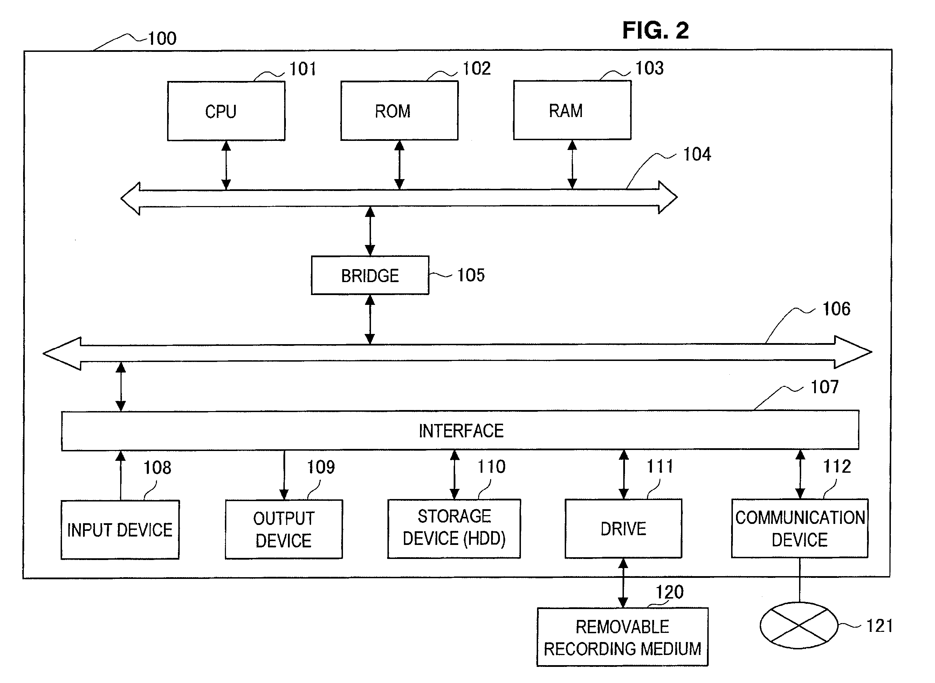

Next, the hardware configuration of the display control apparatus 100 according to the present embodiment will be described based on FIG. 2. FIG. 2 is a block diagram showing the hardware configuration of the display control apparatus 100 according to the embodiment.

FIG. 2 is an explanatory view showing the hardware configuration of the display control apparatus 100 according to the embodiment. The display control apparatus 100 includes a CPU (Central Processing Unit) 101, a ROM (Read Only Memory) 102, a RAM (Random Access Memory) 103, a host bus 104, a bridge 105, an external bus 106, an interface 107, an input device 108, an output device 109, a storage device (HDD) 110, a drive 111, and a communication device 112.

The CPU 101 functions as an arithmetic processing unit and a control unit and controls overall operations in the display control apparatus 100 according to various programs. The CPU 101 may be a microprocessor. The ROM 102 stores programs, arithmetic parameters and the like used by the CPU 101. The RAM 103 temporarily stores programs used for execution of the CPU 101 and parameters that change during execution thereof according to circumstances. These components are mutually connected by the host bus 104 constituted by a CPU bus or the like.

The host bus 104 is connected to the external bus 106 such as PCI (Peripheral Component Interconnect/Interface) bus via the bridge 105. Incidentally, the host bus 104, the bridge 105, and the external bus 106 do not necessarily have to be constituted as separate components and these functions may be implemented in one bus.

The input device 108 includes, for example, an input means for inputting information by the user such as a mouse, keyboard, touch panel, button, microphone, switch, and lever and an input control circuit that generates an input signal based on input by the user and outputs the input signal to the CPU 101. The user of the display control apparatus 100 can input various kinds of data into the display control apparatus 100 or instruct processing operations by operating the input device 108.

The output device 109 includes, for example, a display device such as a CRT (Cathode Ray Tube) display device, liquid crystal display (LCD) device, OLED (Organic Light Emitting Display) device, and lamp and a sound output device such as a speaker and headphone. The output device 109 outputs, for example, reproduced content. More specifically, the display device displays various kinds of information such as reproduced video data as text or images. The sound output device, on the other hand, outputs reproduced sound data after conversion into sound.

The storage device 110 is a device for data storage constituted as an example of the storage unit of the display control apparatus 100 according to the present embodiment. The storage device 110 may contain a storage medium, a recording device to record data on the storage medium, a reading device to read data from the storage medium, or a deletion device to delete data recorded on the storage medium. The storage device 110 is constituted, for example, by a HDD (Hard Disk Drive). The storage device 110 drives the hard disk to store programs executed by the CPU 101 and various kinds of data. The storage device 110 also records content data, metadata, or device data.

The drive 111 is a reader writer for the storage medium and is added to the display control apparatus 100 internally or externally. The drive 111 reads information recorded on an inserted removable recording medium 120 such as a magnetic disk, optical disk, magneto-optical disk, and semiconductor memory and outputs the information to the RAM 103.

The communication device 112 is a communication interface constituted, for example, by a communication device to connect to a communication network 121 and the like. The communication device 112 may be a radio LAN (Local Area Network) compliant communication apparatus, a wireless USB compliant communication device, or a wire communication device that performs communication by wire. The communication device 112 transmits/receives various kinds of data such as content data and a contents list to/from external devices via the communication network 121.

### [3] Function configuration of the display control apparatus

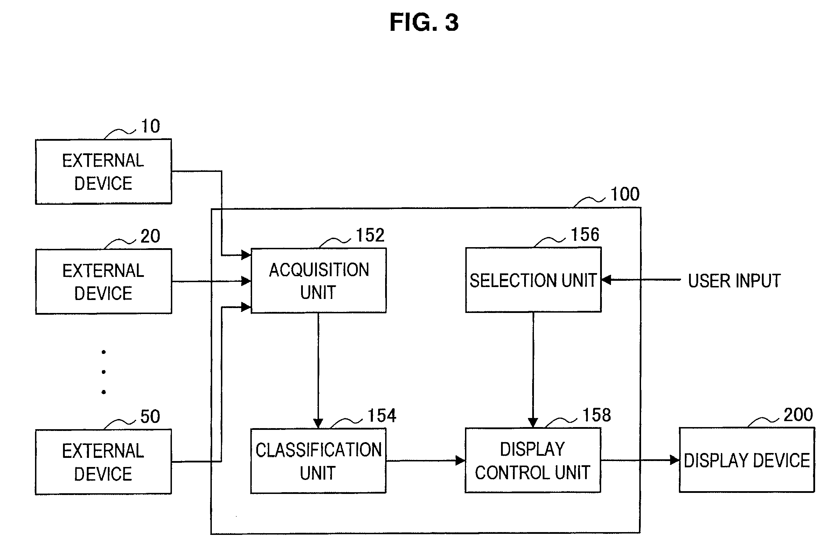

In the foregoing, the hardware configuration of the display control apparatus 100 according to the present embodiment have been described with reference to FIG. 2. Next, the function of the display control apparatus 100 according to the present embodiment will be described with reference to FIG. 3.

FIG. 3 is a block diagram showing the function configuration of the display control apparatus 100 according to the present embodiment. As shown in FIG. 3, the display control apparatus 100 according to the present embodiment includes an acquisition unit 152, a classification unit 154, a selection unit 156, and a display control unit 158.

The acquisition unit 152 has a function to acquire a contents list containing a thumbnail and date/time information of content recorded in a device externally connected to the display control apparatus 100. The acquisition unit 152 provides an acquired contents list to the classification unit 154.

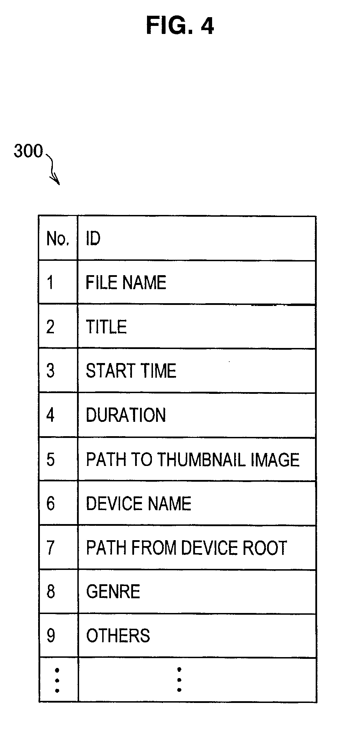

Here, a contents list 300 acquired by the acquisition unit 152 will be described with reference to FIG. 4. FIG. 4 is an explanatory view illustrating content of the contents list 300. As shown in FIG. 4, the contents list 300 contains the file name of content, title, start time, duration, path to thumbnail images of the content, device name indicating identification information that can identify device and the like, path from root of the device, genre, and other necessary information such as program information.

In the present embodiment, by acquiring the contents list 300 from other devices externally connected to the display control apparatus 100, a display apparatus 200 can be caused to transparently display all thumbnails of content recorded in the other devices. Therefore, user's stress can be reduced because the user does not have to be aware of which content is recorded in which device.

Returning to FIG. 3, the classification unit 154 has a function to classify thumbnails of content contained in the plurality of contents lists acquired by the acquisition unit 152 based on date/time information contained in the contents lists. As described above, the acquisition unit 152 acquires contents lists of a plurality of pieces of content recorded in other devices and provides the contents lists to the classification unit 154. The classification unit 154 classifies thumbnails of content contained in the plurality of contents lists according to date or rearranges thumbnails according to date/time. The classification unit 154 provides information about classified thumbnails of content to the display control unit 158.

The display control unit 158 has a function to cause the display apparatus 200 to display thumbnails of the plurality of pieces of content by associating with the date/time display indicating date/time information of a predetermined period for each piece of date/time information of thumbnails of the plurality of pieces of content. The date/time display indicating date/time information of a predetermined period is, for example, the display in which date and time information for one week is chronologically arranged or that in which date information for one month is arranged on a calendar. Thumbnails of the plurality of pieces of content are displayed together with date/time information of a predetermined period.

The display control unit 158 may display the title of content in the display apparatus 200 together with the date/time display. Alternatively, the start time of content or information showing the length of content such as the duration of content may be displayed together with thumbnails of content.

The selection unit 156 has a function to select one of thumbnails of the plurality of pieces of content displayed in the display apparatus 200 in accordance with a user operation. The user selects one of thumbnails of the plurality of pieces of content displayed in the display apparatus 200 by operating a remote control or the like. The selection unit 156 may horizontally shift the time axis shown by date/time information by scrolling the display screen in accordance with the user operation.

The display control unit 158 causes the display apparatus 200 to display thumbnails of one piece or more than one pieces of content corresponding to date information of a thumbnail of one piece of content selected by the selection unit 156 by arranging thumbnails of the content clockwise in descending order of time. The display apparatus 200 may be caused to display thumbnails of content by arranging thumbnails of content clockwise in descending order of time by associating with the clock display in which one turn corresponds to 12 hours.

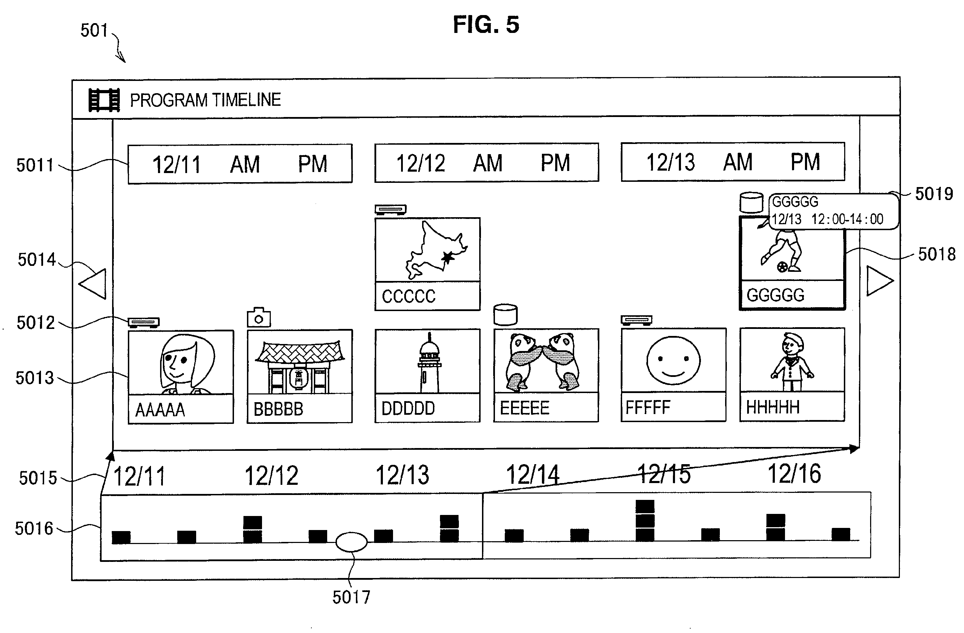

Here, a screen display example when thumbnails of content are displayed in the display apparatus 200 by associating with a date/time display in which date/time information of a predetermined period is made to be chronologically arranged and displayed with reference to FIG. 5 to FIG. 9.

FIG. 5 is an explanatory view illustrating a display screen 501 when the display apparatus 200 is caused to display thumbnails of a plurality of pieces of content by associating with a date/time display in which date/time information of a predetermined period is made to be chronologically arranged and displayed. The display apparatus 200 can be caused to simultaneously display all content recorded in external devices connected to the display control apparatus 100 in the display screen 501 by pressing a scroll button 5014.

As shown in FIG. 5, for example, a date/time display 5011 can be made to be a display to show date/times of three days including thumbnails of content selected by the user. The date/time display 5011 is made a date/time display combining dates of three days and AM and PM. Then, by associating with the date/time display 5011, thumbnails 5013 of content having applicable date/time information as attribute information are displayed. In the present embodiment, the start time of the above contents lists and the date/time display 5011 are associated and displayed.

A thumbnail 5018 of content selected by the user may be caused to be displayed together with a display 5019 including the start time and end time of the content. Alternatively, a display 5012 showing the device in which the content is recorded may be made together with the thumbnails 5013 of content. Accordingly, the user can know in which of externally connected devices content displayed in the display screen 501 is recorded.

Alternatively, a display 5016 to show the number of pieces of content corresponding to the date may be caused to be made together with date information 5015. Accordingly, the user can intuitively know how many pieces of content exist in which period.

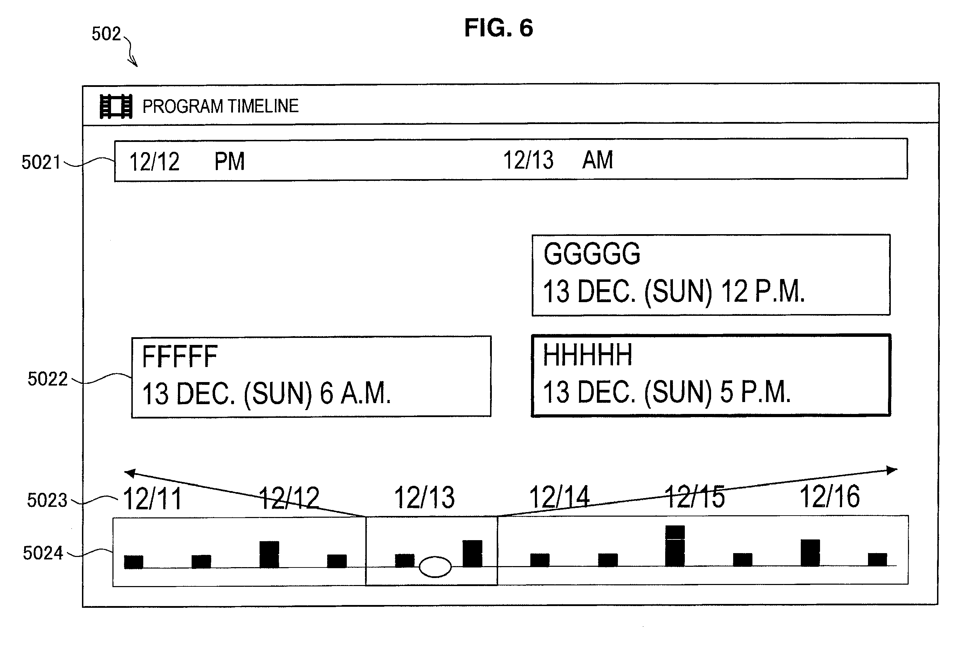

FIG. 6 is an explanatory view illustrating a display screen 502 when the display apparatus 200 is caused to display only titles of a plurality of pieces of content by associating with a date/time display in which date/time information of a predetermined period is made to be chronologically arranged and displayed. As shown in FIG. 6, a title 5022 is displayed in the display screen 502 by associating with date information 5021. Alternatively, like the display screen 501, a display 5024 to show the number of pieces of content corresponding to the applicable date may be caused to be made together with date information 5023.

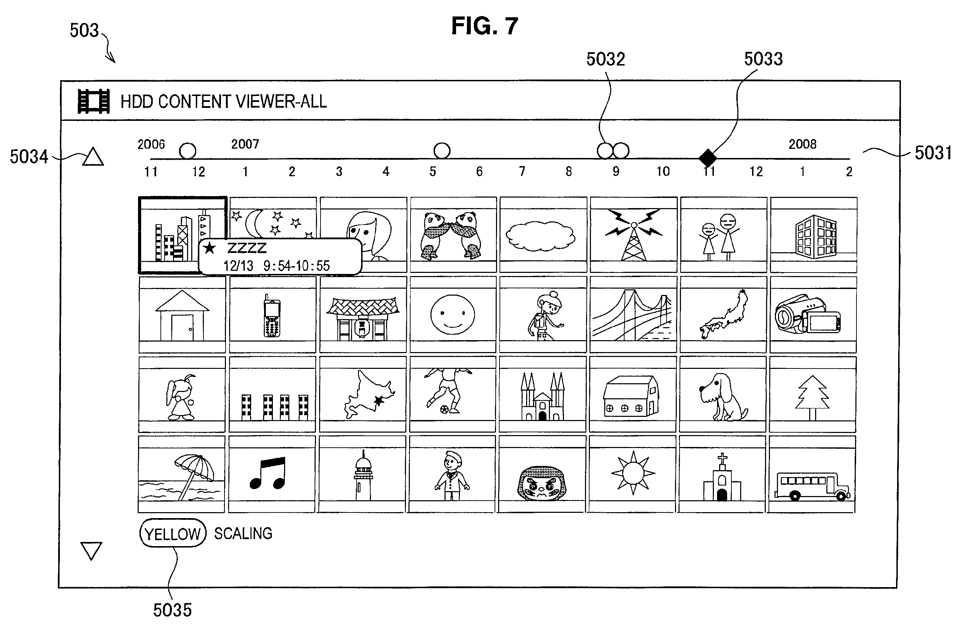

Next, other examples when the display apparatus 200 is caused to display thumbnails of a plurality of pieces of content by associating with a date/time display in which date/time information of a predetermined period is made to be chronologically arranged and displayed with reference to FIG. 7 to FIG. 9. FIG. 7 is an explanatory view illustrating a display screen 503 when thumbnails of a plurality of pieces of content are made to be chronologically displayed like tiles in the display screen 503.

As shown in FIG. 7, thumbnails of a plurality of pieces of content are chronologically displayed like tiles in the display screen 503. Thumbnails of all pieces of content can be caused to be displayed by a scroll bar 5034 in the display screen 503 being pressed by a user operation. In addition, a display 5032 showing the number of pieces of content corresponding to the applicable date/time may be made together with a display 5031 showing date/time information in the upper part of the display screen 503. Further, a focus display 5033 causing content selected by the user to be displayed explicitly may be made.

In addition, for a thumbnail of content selected by the user, a display including the start time and end time of the content may be caused to be made together with the thumbnail. Further, a predetermined period in which thumbnails of content to be displayed are caused to be displayed may be scaled up or scaled down by a scaling button 5035 being selected. That is, if the scale-down button is selected in the display screen 503 that causes all thumbnails of content to be displayed, thumbnails of content contained in a predetermined week can be caused to be displayed or those of content contained in a predetermined day can be caused to be displayed. The scaling button 5035 may be a button such as a remote control operated by the user.

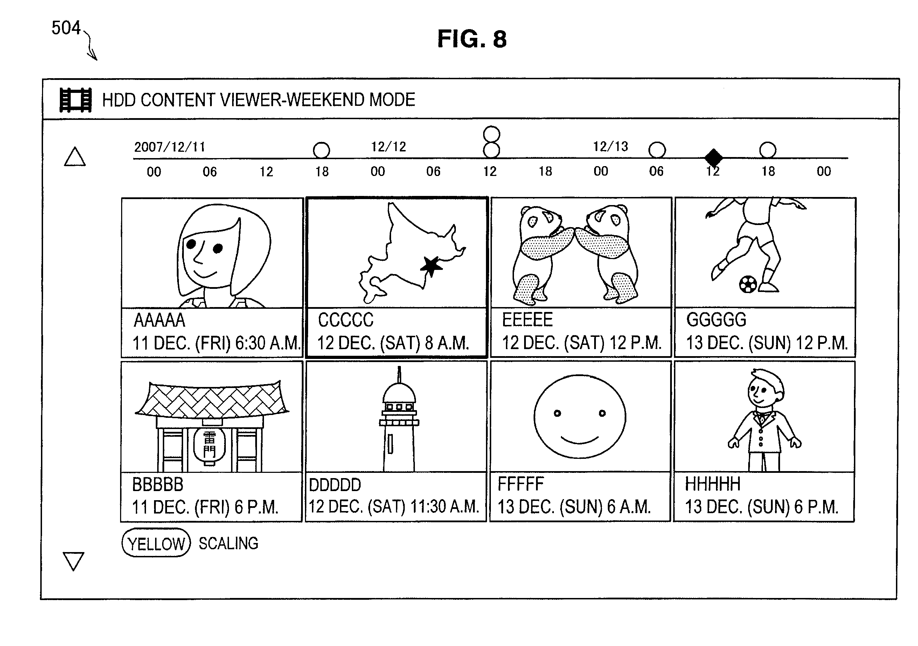

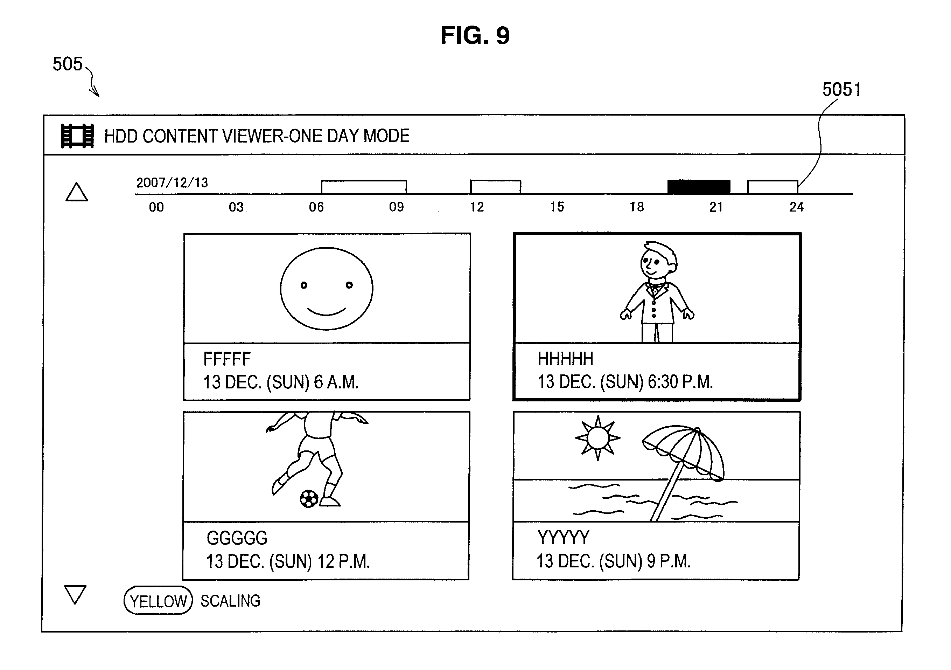

FIG. 8 is an explanatory view illustrating a display screen that causes thumbnails of content of a specific week to be displayed. FIG. 9 is an explanatory view illustrating a display screen that causes thumbnails of content of a specific day to be displayed. When, as shown in FIG. 8, thumbnails of content corresponding to dates of a specific week should be caused to be displayed (display screen 504), each thumbnail to be displayed may be enlarged and further, the title of content may also be displayed together with the thumbnail when compared with a case in which thumbnails of all content are caused to be displayed (display screen 503).

Further, as shown in FIG. 9, thumbnails of content corresponding to the date of a specific day should be caused to be displayed (display screen 505), each thumbnail to be displayed may be enlarged when compared with a case in which thumbnails of content corresponding to the date of a specific week should be caused to be displayed (display screen 504).

Like the display screen 504, the title of content may be caused to be displayed together with the thumbnail of the content or a display 5051 showing the presence of recorded content may be made together with a date/time display. The display 5051 showing the presence of recorded content may be made to visually show a recorded time of content. Accordingly, the user can intuitively know content of when and how long recording time was recorded.

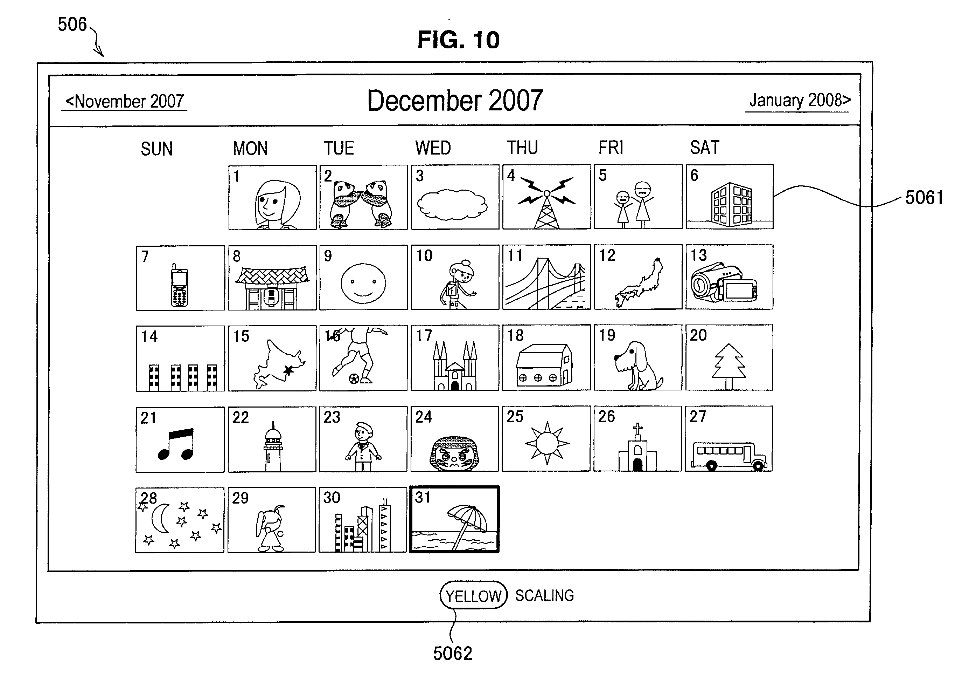

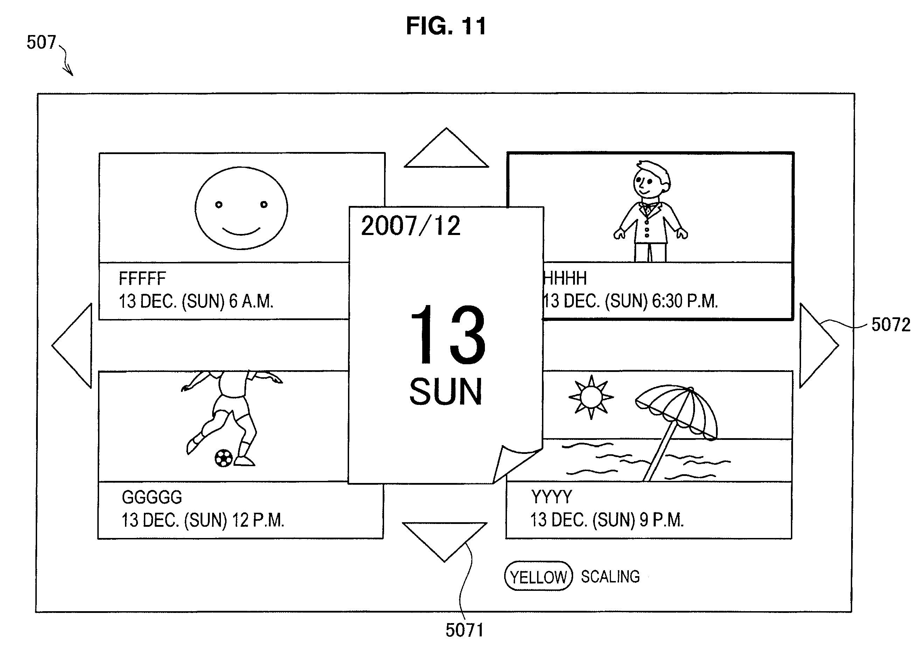

Next, a case in which the display apparatus 200 is caused to display thumbnails of a plurality of pieces of content by associating with the date display in which date information of a predetermined period is made to be arranged and displayed on a calendar with reference to FIG. 10 and FIG. 11. FIG. 10 is an explanatory view illustrating a display screen 506 causing thumbnails of a plurality of pieces of content to be arranged and displayed on a calendar. As shown in FIG. 10, thumbnails of the plurality of pieces of content are arranged and displayed on a calendar together with the date display.

If thumbnails of a plurality of pieces of content for the same date on the calendar are present, one of the plurality of thumbnails may be made to be displayed. The thumbnail to be represented may be one of content with the earliest recording time or one containing a person's face. If representative content is preset by a user operation, a thumbnail of the applicable content may be displayed.

In addition, the scale of displayed date/time of displayed content may be changed by a scaling button 5062 being selected. For example, if the scale-down button is selected in the display screen 506 in which thumbnails of content are displayed on the calendar, thumbnails of content contained in a specific week or specific day may be caused to be displayed. The scaling button 5062 may be a button such as a remote control operated by the user.

As show, for example, in a display screen 507 in FIG. 11, together with a date display 5017 showing a specific date, thumbnails of content corresponding to the applicable date may be caused to be displayed. Further, for example, the date display may be made to be changeable by operating up/down arrow keys of a remote control or the like. If a date display is changed, the display of thumbnails of content is changed to those of content corresponding to the applicable date together with the date change.

Further, the displayed week or month may be made to be changeable by pressing right/left arrow keys, a "<<" key, or a ">>" key of a remote control or the like. Accordingly, the user can intuitively grasp what content is recorded by associating with dates or the like.

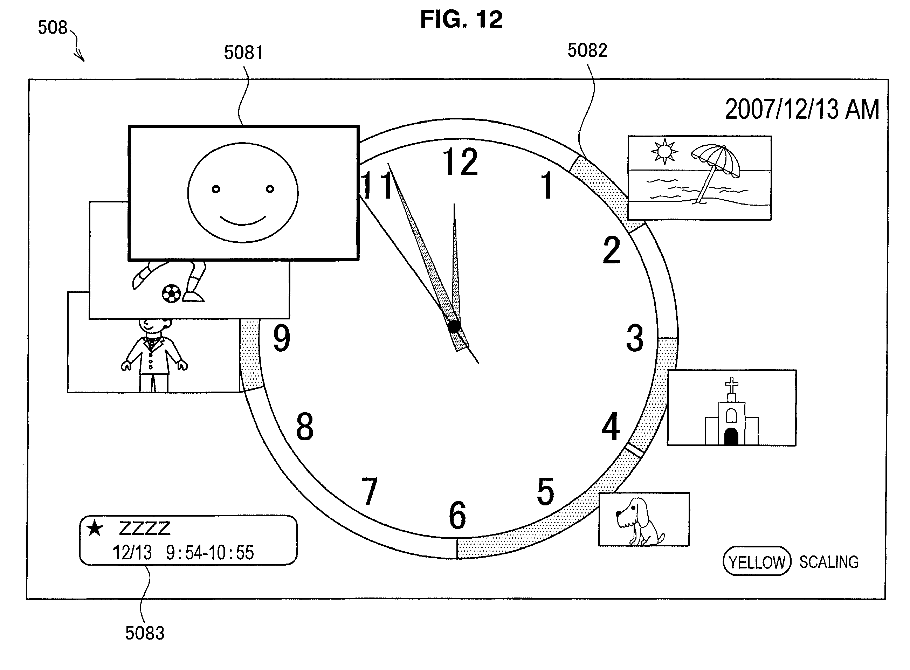

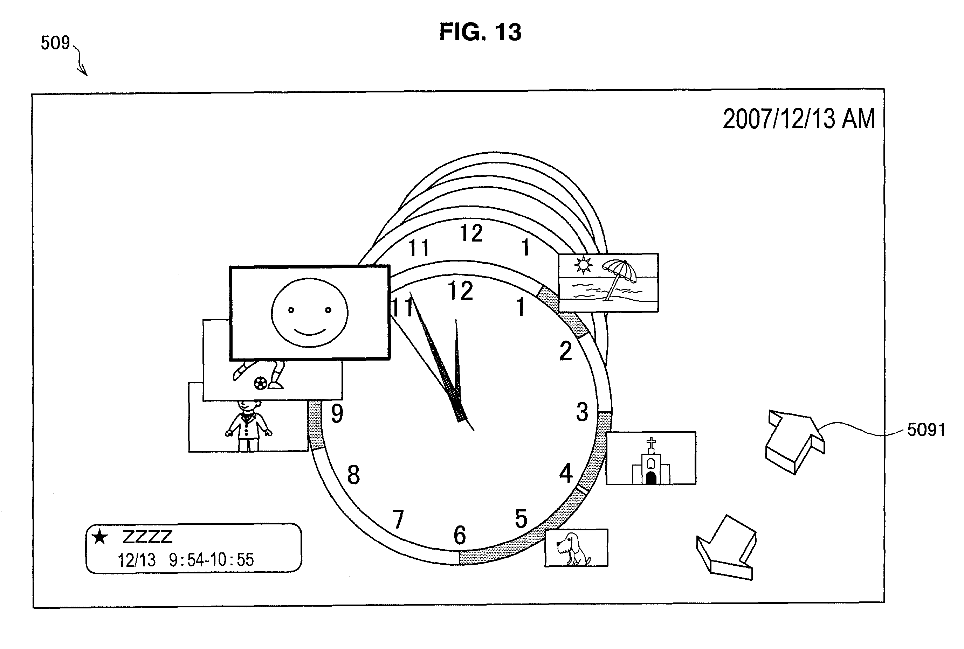

Next, a case in which thumbnails of content are arranged clockwise in descending order of time and displayed in the display apparatus 200 will be described with reference to FIG. 12 and FIG. 13. FIG. 12 displays thumbnails of content of a specific date by arranging thumbnails 5081 of content clockwise in descending order of time. Together with the thumbnails 5081 of content, a display 5082 showing the length of content may also be made. The length of content may be displayed by the length of a portion on a circumference. Further, the title of the thumbnail 5081 of content selected by the user may be displayed or a display 5083 showing the start time and end time may be made.

A display screen 508 may be made to be displayed by a screen being changed from the display screens 501 to 507 shown in FIG. 5 to FIG. 11 in accordance with a user operation. For example, when a thumbnail of content displayed in the display screen 501 in chronological form shown in FIG. 5 is selected by a user operation, the display screen 508 may be caused to display the thumbnail of content corresponding to date information of the content.

Similarly, if a thumbnail of content displayed in the display screens 503 to 505 shown in FIG. 7 to FIG. 9 is selected, the thumbnail may be made to change to the display screen 508. If a thumbnail of content displayed in the display screen 506 or the display screen 507 displayed in calendar form is selected, the thumbnail may be made to change to the display screen 508.

Further, after the display screen 508 is displayed, the displayed date may be made to be changeable by pressing the right/left arrow keys, "<<" key, or ">>" key of a remote control or the like. Accordingly, the user can intuitively grasp content recorded in external devices or the like.

As shown in FIG. 13, the display apparatus 200 may be caused to display ) thumbnails of content by arranging thumbnails of the content clockwise in descending order of time associating with the clock display in which one turn corresponds to 12 hours. As shown in FIG. 13, by causing thumbnails of content to be displayed associating with the clock display in which one turn corresponds to 12 hours, the user can intuitively grasp in which time zone content is recorded. Further, by pressing an arrow key 5091 to change the time in units of 12 hours in the future or in the past, thumbnails of content in the display screen 509 can be changed to those of content corresponding to the changed dates/times.

In addition, by specifying only time zones in which thumbnails of a plurality of pieces of content are recorded, only thumbnails of content contained in the applicable time zones may be caused to be displayed. In the present embodiment, all recorded content is included for display, but the present invention is not limited to such an example. For example, only thumbnails of content in the genre specified by the user from all recorded content may be made to be displayed. Alternatively, only thumbnails of content recommended by a content provider may be made to be displayed.

### [4] Operation of the display control apparatus

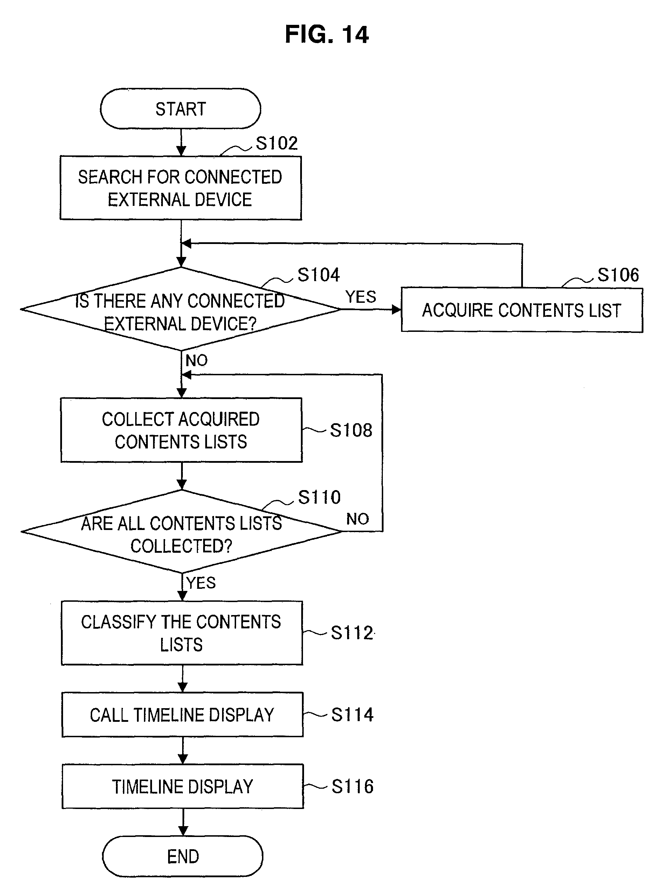

In the foregoing, screen display examples have been described. Next, the display control method of the display control apparatus 100 will be described with reference to FIG. 14. FIG. 14 is a flow chart illustrating the display control method of the display control apparatus 100.

As shown in FIG. 14, the display control apparatus 100 first makes a search for external devices connected to the display control apparatus 100 (S102). Since, as described above, external devices such as a digital camera, digital video camera, and video recorder are connected to the display control apparatus 100, the display control apparatus 100 searches for external devices at step S102.

As a result of searching for connected external devices at step S102, it is determined whether there is any external device (S104). If it is determined at step S104 that there is a connected device, a contents list of content stored in the connected device is acquired (S106). Then, after returning to step S104, it is determined whether there is any other connected external device again.

If it is determined at step S104 that there is no other connected external device, all contents lists acquired at step S106 are collected (S108). After all contents lists being collected at step S108, the display control apparatus 100 holds all contents lists of content recorded in external devices connected to the display control apparatus 100.

Then, it is determined whether all contents lists have been collected (S110). If it is determined at step S110 that all contents lists are not collected, collection processing of contents lists at step S108 is performed again. If it is determined at step S110 that all contents lists are collected, a classification of contents lists is made by the classification unit 154 provided with the display control apparatus 100 (S112).

After the classification of contents lists being made at step S112, a timeline display is called (S114). The calling of timeline display at step S114 is to execute a call to cause the display screen displayed in the display apparatus 200 to display a timeline in chronological form or calendar form.

For example, the timeline display may be made to be selected from a menu screen in the display screen or by an operation key on a remote control. If the timeline display is called at step S114, a timeline is displayed in the display screen (S116).

The timeline display made at step S116 is to display thumbnails of content together with date/time information. That is, one of FIG. 5 to FIG. 13 is caused to be displayed. In the foregoing, the display control method of the display control apparatus 100 has been described.

According to the display control apparatus 100 in the present embodiment, the display apparatus 200 is caused to display thumbnails of a plurality of pieces of content by associating with a date/time display showing date/time information of a predetermined period for each piece of date/time information of thumbnails of the plurality of pieces of content and if one of displayed thumbnails of the plurality of pieces of content is selected, thumbnails of one piece or more than one pieces of content corresponding to date information of a thumbnail of one selected piece of content are arranged as thumbnails of content clockwise in descending order of time and displayed in the display apparatus 200. Accordingly, thumbnails of content are displayed together with date/time information and therefore, the user can intuitively grasp the presence of content of about what time.

If a plurality of external devices is connected to the display control apparatus 100, contents lists recorded in the plurality of external devices may be acquired to classify acquired contents lists according to each piece of date/time information of thumbnails of content contained in the contents lists. Accordingly, all contents lists recorded in the plurality of external devices can be collected and classified according to date or date/time so that content can be transparently grasped without being aware of in which external device the content is recorded.
The present application contains subject matter related to that disclosed in Japanese Priority Patent Application JP 2008-191836 filed in the Japan Patent Office on JP July 25, 2008.
It should be understood by those skilled in the art that various modifications, combinations, sub-combinations and alterations may occur depending on design requirements and other factors insofar as they are within the scope of the appended claims or the equivalents thereof.

## Claims

1. A display control apparatus, comprising:
a display control unit (158) that causes a display apparatus (200) to display thumbnails of a plurality of pieces of content by associating with a date/time display showing date/time information of a predetermined period for each piece of the date/time information of thumbnails of the plurality of pieces of content; and
a selection unit (156) that selects one of thumbnails of the plurality of pieces of content displayed in the display apparatus (200) in accordance with a user operation, wherein
the display control unit (158)
causes the display apparatus (200) to display thumbnails of one piece or more than one pieces of content corresponding to date information of a thumbnail of one piece of content selected by the selection unit (156) by arranging thumbnails of the content clockwise in descending order of time.

2. The display control apparatus according to claim 1, wherein the display control unit (158) causes the display apparatus (200) to display thumbnails of the content by associating with a clock display in which one turn corresponds to 12 hours and arranging thumbnails of the content clockwise in descending order of time.

3. The display control apparatus according to claim 1, wherein the display control unit (158) displays thumbnails of the plurality of pieces of content corresponding to a date/time display showing date/time information of a period after a predetermined time passes or before the predetermined time passes from a period displayed in the display apparatus (200) in accordance with a user operation.

4. The display control apparatus according to claim 1, wherein the display control unit (158) causes the display apparatus (200) to display information about a length of each piece of content together with the display of thumbnails of each piece of content.

5. The display control apparatus according to claim 1, wherein
the display control apparatus (100) is connected to one or more than one other devices (10, 20,.. 50), comprising:
an acquisition unit (152) that acquires a contents list containing thumbnails and date/time information of content recorded in the other devices (10, 20,.. 50); and
a classification unit (154) that classifies thumbnails of content based on the date/time information of a plurality of contents lists acquired by the acquisition unit (152).

6. The display control apparatus according to claim 5, wherein the display control unit (158) causes a display indicating the other devices (10, 20,.. 50) connected to the display control apparatus (100) to be made together with thumbnails of the content.

7. The display control apparatus according to claim 1, wherein the display control unit (158)
causes the display apparatus (200) to display thumbnails of the plurality of pieces of content by associating with the date/time display in which date/time information of a predetermined period is made to be chronologically arranged and displayed.

8. The display control apparatus according to claim 7, wherein the display control unit (158)
causes the display apparatus (200) to make a display showing a number of pieces of content corresponding to the date/time display in which date/time information of the predetermined period is made to be chronologically arranged and displayed.

9. The display control apparatus according to claim 1, wherein the display control unit (158)
causes the display apparatus (200) to display thumbnails of the plurality of pieces of content by associating with a date display in which date information of a predetermined period is caused to be arranged and displayed on a calendar.

10. A display control method comprising the steps of:
causing a display apparatus (200) to display thumbnails of a plurality of pieces of content by associating with a date/time display showing date/time information of a predetermined period for each piece of the date/time information of thumbnails of the plurality of pieces of content;
selecting one of thumbnails of the plurality of pieces of content displayed in the display apparatus (200) in accordance with a user operation; and
causing the display apparatus (200) to display thumbnails of one piece or more than one pieces of content corresponding to date information of a thumbnail of the one selected piece of content by arranging thumbnails of the content clockwise in descending order of time.

11. A program causing a computer to function as a display control apparatus, comprising:
a display control unit (158) that causes a display apparatus (200) to display thumbnails of a plurality of pieces of content by associating with a date/time display showing date/time information of a predetermined period for each piece of the date/time information of thumbnails of the plurality of pieces of content; and
a selection unit (156) that selects one of thumbnails of the plurality of pieces of content displayed in the display apparatus (200) in accordance with a user operation, wherein
the display control unit (158)
causes the display apparatus (200) to display thumbnails of one piece or more than one pieces of content corresponding to date information of a thumbnail of one piece of content selected by the selection unit (156) by arranging thumbnails of the content clockwise in descending order of time.
